# EUROPÄISCHE PATENTSCHRIFT

(11) **EP 1 985 204 B1**
(45) Veröffentlichungstag und Bekanntmachung des Hinweises auf die Patenterteilung: **08.04.2015**
(21) Anmeldenummer: 08103992.7
(22) Anmeldetag: 11.02.2003
(51) Int. Cl.: A47B 95/04, F25D 25/02, A47B 96/06, A47F 5/08, G09F 3/20

(54) **Steckprofilelement**
Plug profile element
Elément de profilé enfichable

(30) Priorität: 25.02.2002 DE 10208058
(43) Veröffentlichungstag der Anmeldung: 29.10.2008
(62) Teilanmeldung aus: 03002666.0
(73) Patentinhaber: BSH Hausgeräte GmbH, 81739 München (DE)
(72) Erfinder: Gerstner, Silvia, 89129, Langenau (DE); Grasy, Siegfried, 89160, Dornstadt (DE); Malisi, Michaela, 89518, Heidenheim (DE); Poidinger, Albert, 89567, Sontheim (DE)

(56) Entgegenhaltungen:
- GB-A- 2 250 313
- GB-A- 2 310 879
- US-A- 4 109 887
- US-A- 5 677 030

## Beschreibung

Die vorliegende Erfindung betrifft ein Kühlgerät mit einem Innenteil, dass mit einem Steckprofilelement mit zwei eine Nut begrenzenden Schenkeln. Derartige Steckprofilelemente können mit ihrer Nut auf die Ränder von plattenförmigen Teilen aufgesteckt werden, um letztere zu versteifen und/oder vor Beschädigung zu schützen.

Für die Wirksamkeit eines solchen Steckprofilelementes ist ein ausreichend fester Sitz an dem Rand des plattenförmigen Teiles von hoher Bedeutung. Eine gewisse Festigkeit des Sitzes kann durch elastisches Einklemmen des Randes zwischen den Schenkeln erreicht werden, doch ist hierfür eine genaue Anpassung der Breite der Nut an die Dicke des piattenförmigen Abschnittes erforderlich. Je höher die benötigte Klemmkraft ist, um so steifer muß das Steckprofilelement sein um sie zu erzeugen. Je steifer jedoch das Steckprofilelement ist, um so eher führen Streuungen in der Dicke des plattenförmigen Abschnittes dazu, dass kein fester Sitz des Steckprofilelementes erreicht werden kann oder das Aufstecken des Steckprofilelementes mit extremen Schwierigkeiten verbunden oder unmöglich ist und der Versuch des Aufsteckens gar zur Beschädigung des Randes führt. Dieses Problem stellt sich insbesondere bei einem Steckprofilelement, das als Schutz für den Rand einer Platte aus Flachglas vorgesehen ist, da die Herstellung solcher Platten mit Stärkentoleranzen unter 0.1 mm sehr aufwendig ist.

Ein solcher fester Sitz kann selbstverständlich hergestellt werden durch Verkleben des Steckprofilelementes an dem plattenförmigen Abschnitt, doch erfordert dies neben dem Aufstecken noch einen zusätzlichen Arbeitsschritt zum Aufbringen oder Aktivieren eines Klebers. Eine andere Möglichkeit ist, das Steckprofilelement zu verrasten, doch werden hierfür komplementäre Rasteinrichtungen am Steckprofilelement und dem plattenförmigen Abschnitt benötigt, die die Herstellung beider verteuern. In EP 1 510 703 A1 ist ein Profilelement aus Metall offenbart, das z.B. auf einen Türabsteller als Abschlussleiste aufgesteckt werden kann. Eine ausreichende Klemmwirkung wird durch Vorsprünge am ersten und zweiten Schenkel des Profilelements erreicht. Nachteilig an dieser Lösung ist der durch die Verwendung von Metall bedingte hohe Kosten- und Fertigungsaufwand.

Aufgabe der Erfindung ist daher, ein Steckprofilelement anzugeben, das die Nachteile des Stand der Technik mindestens teilweise überwindet.

Die Aufgabe wird gelöst durch ein Steckprofil mit den Merkmalen des Anspruches 1. Der Gegenstand der vorliegenden Erfindung ist somit ein Kühlgerät mit einem Innenteil, das mit einem Steckprofilelement ausgestattet ist, das zwei eine Nut begrenzende, miteinander verbundene Schenkel aus einem ersten Werkstoff aufweist und das auf einen plattenförmigen Abschnitt mit einem Rand aufsteckbar ist, wobei an der der Nut zugewandten Seitenfläche wenigstens eines der Schenkel wenigstens auf einem Teil der Länge der Nut ein erster in die Nut hinein gerichteter Vorsprung aus einem zweiten Werkstoff angebracht ist, der biegsamer als der erste Werkstoff ist, dadurch gekennzeichnet, dass die Außenflächen der Steckprofilelemente mit einer metallischen oder eine metallische Oberfläche imitierenden Folie überzogen sind.

Infolge der unterschiedlichen Härten der zwei Werkstoffe wird beim Aufstecken des Steckprofilelementes auf einen plattenförmigen Abschnitt im wesentlichen der relativ weiche Vorsprung verformt, wenn er zwischen dem plattenförmigen Abschnitt und dem Schenkel, an dem er angebracht ist, eingeklemmt wird. Er ermöglicht das Einklemmen von Platten mit in einem vergleichsweise weiten Toleranzbereich streuender Stärke, wobei die realisierbare Klemmkraft weniger durch die (vergleichsweise niedrige) Steife des zweiten Werkstoffs bestimmt ist als durch die demgegenüber größere des ersten, die Schenkel und deren Verbindung bildenden Werkstoffs.

Vorzugsweise handelt es sich bei dem Vorsprung um eine elastische Lippe, die sich in einem entspannten Zustand von der Seitenfläche aus zur Mitte und zum Boden der Nut hin, also unter einem schrägen Winkel zu einer gedachten Mittelebene der Nut, erstreckt. Durch die Orientierung der Lippe zum Boden der Nut hin wird erreicht, dass diese beim Aufstecken des Steckprofilelementes auf den plattenförmigen Abschnitt flach gegen die Seitenfläche des Schenkels gedrückt wird und von der vom plattenförmigen Abschnitt ausgeübten Reibungskraft in die Länge gezogen wird. Dadurch verringert sich die wirksame Dicke der Lippe, und die beim Aufstecken des Steckprofilelementes zu überwindende Reibung ist gering. Wenn jedoch eine Zugkraft in entgegengesetzter Richtung auf das Steckprofilelement wirkt, so bewirkt diese eine Stauchung der zwischen Schenkel und Plattenabschnitt eingeklemmten Lippe, durch die deren Dicke zunehmen würde, wenn sie nicht von Schenkel und Plattenabschnitt daran gehindert würde. Dies führt zu einer erheblichen Zunahme der Reibung, so dass das Abziehen des Steckprofilelementes von dem Plattenabschnitt allenfalls mit erheblich größerem Kraftaufwand möglich ist als das Aufstecken.

Um ein Abziehen des Steckprofilelementes dennoch nicht übermäßig zu erschweren, ist es zweckmäßig, wenn die Lippe in eine Orientierung schwenkbar ist, in der sie sich von der Seitenfläche aus zur Mitte und zur Öffnung der Nut hin erstreckt. Das heißt, wenn beim Abziehen des Steckprofilelementes vom Plattenabschnitt ein anfänglicher Widerstand überwunden ist und die Lippe in diese Orientierung geschwenkt ist, ist der zum vollständigen Entfernen des Steckprofilelementes vom Plattenabschnitt erforderliche Kraftaufwand nicht mehr wesentlich verschieden von dem zum Aufstecken benötigten.

Unter dem Gesichtspunkt der Festigkeit und der einfachen Herstellbarkeit ist bevorzugt, dass die Lippe sich über die gesamte Länge der Nut erstreckt.

Der Vorsprung hängt vorzugsweise einteilig mit einem Fuß zusammen, der in eine in der Seitenfläche gebildete Aussparung eingreift. Eine solche Aussparung, die sowohl einen engen, schlitzförmigen als auch einen weiten Querschnitt geringer Tiefe haben kann, vergrößert die Kontaktfläche zwischen den zwei Werkstoffen und verbessert somit den Halt beider aneinander.

Das Vorhandensein mehrerer in Tiefenrichtung der Nut gestaffelter erster Vorsprünge an der Seitenfläche verhindert ein Verkippen des Steckprofilelementes und des Plattenabschnitts gegeneinander um eine zur Längsrichtung des Steckprofilelements parallele Achse, außerdem trägt jeder einzelne Vorsprung für sich zur Haltekraft des Steckprofilelementes bei.

Es können beide Schenkel oder nur ein einzelner Schenkel des Steckprofilelementes mit wenigstens je einem ersten Vorsprung versehen sein.

Darüber hinaus kann an wenigstens einem Schenkel ein zweiter in die Nut hinein gerichteter Vorsprung vorhanden sein, der näher an der Öffnung der Nut angeordnet ist als der erste Vorsprung und weniger weit in die Nut eingreift als dieser. Ein solcher zweiter Vorsprung, der nicht notwendigerweise mit dem eingeschobenen Plattenabschnitt in Kontakt kommen muß, dient dazu, das Eindringen von Flüssigkeiten in die Nut zu verhindern, die, wenn sie in Kontakt mit dem ersten Vorsprung trocknen, diesen am Plattenabschnitt verkleben und so ein Entfernen des Steckprofilelementes ohne Beschädigung unmöglich machen könnten.

Einer bevorzugten Ausgestaltung des Steckprofilelementes zufolge, die insbesondere als Schutzprofil für einen Fachboden eines Kältegerätes brauchbar ist, sind die zwei Schenkel spiegelbildlich zueinander geformt.

Einer anderen bevorzugten Ausgestaltung zufolge, die vorzugsweise an einem Auszugkasten oder einem Türabsteller einer Kältegerätes eingesetzt wird, ist einer der zwei Schenkel über die Öffnung der Nut hinaus zu einem Schild verlängert, das insbesondere als gestalterisches Element an den Sichtseiten der Türabsteller oder Auszugkästen dienen kann. Um zu verhindern, dass z.B. spielende Kinder die freien Ränder eines solchen Schildes leicht fassen und den Schild verbiegen können, ist an einer solchen Sichtseite vorzugsweise eine Vertiefung mit an die Form des Schildes angepaßter Form gebildet, in die dessen Ränder auf wenigstens einem Teil ihrer Stärke eingreifen.

Um zu verhindern, dass Ecken des Schildes von dem Auszugkasten oder Türabsteller abstehen, ist der Schild vorzugsweise in Längsrichtung mit der Nut zugewandter Konkavität gekrümmt, und/oder Schenkel und Schild sind so angebracht, dass sich ein vom Boden der Nut zu ihrer Öffnung hin verjungter Querschnitt der Nut ergibt. Wenn der Krümmungsradius des Schildes kleiner als ein entsprechender Krümmungsradius des plattenförmigen Abschnittes des Auszugkastens oder Türabstellers ist, auf den das Steckprofilelement aufgesteckt wird, drücken die Ecken des Schildes elastisch gegen den plattenförmigen Abschnitt und spreizen sich nicht von diesem ab.

Das erfindungsgemäße Steckprofil kann in einfacher Weise durch Co-Extrusion der zwei Werkstoffe hergestellt werden; alternativ kann es als Spritzgussteil, ggf. in zwei aufeinanderfolgenden Spritzgussschritten für die zwei Werkstoffe, gefertigt werden.

Weitere Merkmale und Vorteile der Erfindung ergeben sich aus der nachfolgenden Beschreibung von Ausführungsbeispielen mit Bezug auf die beigefügten Figuren. Es zeigen:
- Fig. 1: eine auseinandergezogene Ansicht eines Kühlgutträgers für ein Kältegerät mit erfindungsgemäßen Steckprofilelementen;
- Fig. 2: einen Querschnitt durch ein Steckprofilelement;
- Fig. 3: einen Querschnitt durch eine abgewandelte Ausgestaltung des Steckprofilelementes;
- Fig. 4: das Steckprofilelement aus Fig. 3 in auf den Rand einer Platte aufgestecktem Zustand;
- Fig. 5: eine zweite Ausgestaltung eines erfindungsgemäßen Steckprofilelementes, das als Dekorschild für einen Türabsteller eines Kältegerätes verwendbar ist;
- Fig. 6: eine perspektivische Ansicht eines Türabstellers für ein Kältegerät ohne Dekorschild;
- Fig. 7: eine Draufsicht auf den Türabsteller der Fig. 6 und ein dazu passendes Steckprofilelement;
- Fig. 8: einen vertikalen Schnitt durch das in Fig. 7 gezeigte Steckprofilelement;
- Fig. 9: einen vertikalen Teilschnitt durch einen Türabsteller mit daran montiertem Steckprofilelement; und
- Fig. 10: eine vergrößerte Darstellung eines Details aus Fig. 9.

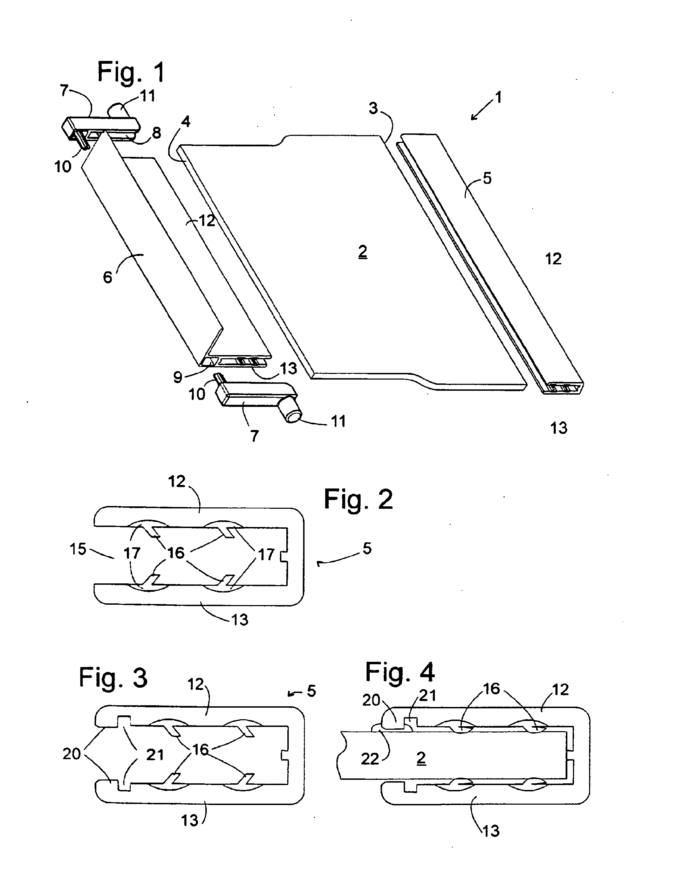

Fig. 1 zeigt einen Fachboden 1 für ein Kältegerät in einer auseinandergezogenen perspektivischen Darstellung. Er ist aufgebaut aus einer Trägerplatte 2 aus Glas oder transparentem Kunststoff, auf deren vorderen und hinteren Rand 3, 4 jeweils ein langgestrecktes Steckprofilelement 5, 6 aufgesteckt ist. Die Steckprofilelemente 5, 6 versteifen die Trägerplatte 2 in deren Breitenrichtung, außerdem dient das vordere Steckprofilelement 5 als Schutz des vorderen Randes 3 vor Beschädigung, z.B. durch Behälter, die beim Einladen in das Kältegerät versehentlich gegen den Fachboden 1 gestoßen werden.

Zwei seitliche Abschlusselemente 7 begrenzen das Steckprofilelement 6 an seinen Längsenden. Sie weisen jeweils auf einer Längsseite eine Nut 8 zum Aufstecken auf einen seitlichen Randabschnitt der Trägerplatte 2 auf und können daher auch als Steckprofilelemente im Sinne der Erfindung angesehen werden. Jedes Abschlusselement 7 trägt einen in einen hohlen Kanal 9 des hinteren Steckprofilelementes 6 einsteckbaren Stift 10; auf der der Nut 8 und dem Stift 10 gegenüberliegenden Seite der Abschlusselemente 7 ist jeweils ein Zapfen 11 angeformt, mit dem der Fachboden 1 auf einer an der Seitenwand des Innenbehälters des Kältegerätes geformten Trägerfläche ruht.

Die Steckprofilelemente 5, 6, 7 haben jeweils einen Querschnitt mit zwei parallelen Schenkeln 12, 13, die durch einen Steg 14 verbunden sind und eine Nut 15 begrenzen, in die jeweils ein Rand 3 oder 4 der Trägerplatte 2 einsteckbar ist. An den der Nut 15 zugewandten Seitenflächen der Schenkel 12, 13 sind jeweils zwei sich über die gesamte Länge des betreffenden Steckprofilelementes 5 bzw. 6 erstreckende Vorsprünge 16 angeordnet. Diese Vorsprünge 16 bestehen aus einem anderen, leichter verformbaren Werkstoff als der Rest des Elementes 5 bzw. 6. Die Vorsprünge 16 können z.B. aus einem thermoplastischen Elastomer bestehen, während für die anderen Teile des Abschlusselementes ein steifer, zäher Kunststoff wie etwa Polystyrol bevorzugt ist.

Die Außenflächen der Steckprofilelemente 5, 6 sind mit einer metallischen oder einer eine metallische Oberfläche imitierenden Folie überzogen, um so den Steckprofilelementen 5, 6 das Aussehen zu verleihen, als ob sie aus einem Metall, insbesondere Aluminium oder Edelstahl, bestünden. Da sie jedoch im Inneren aus Kunststoffmaterial bestehen, erscheinen die Steckprofilelemente 5, 6 bei Berührung für einen Benutzer weniger unangenehm kalt als entsprechende Elemente aus Metall.

Die Steckprofilelemente 5, 6 sind in einem Strangguß- oder Strangpreßverfahren durch Co-Extrusion der zwei verschiedenen Werkstoffe gefertigt.

Im Gegensatz dazu sind die unregelmäßig geformten Abschlusselemente 7 im Spritzguss realisiert. Dabei können auch diese an den der Nut 8 zugewandten Seitenflächen ihrer parallelen Schenkel mit zu den Vorsprüngen 16 analogen Vorsprüngen versehen sein, die aus einem weicheren, flexibleren Material bestehen als der Rest eines solchen Abschlusselementes 7.

Fig. 2 zeigt eine erste Ausgestaltung eines Querschnittes des vorderen Steckprofilelementes 5. Die im folgenden beschriebenen Besonderheiten dieses Querschnittes sind jedoch ohne weiteres auch auf das hintere Steckprofilelement 6 bzw. die Abschlusselemente 7 übertragbar.

Zwei lippenförmige Vorsprünge 16 erstrecken sich an jeder der Nut 15 zugewandten Innenfläche des Schenkels 12 bzw. 13. Sie sind schräg zur Mitte und zum Boden der Nut 15 hin orientiert, so dass sie beim Aufschieben des Steckprofilelementes 5 auf den Rand 3 leicht gegen die Innenfläche des jeweiligen Schenkels 12 bzw. 13 gedrückt werden können und so dem Aufstecken nur geringen Widerstand entgegensetzen, beim Abziehen von dem Rand 3 hingegen gestaucht werden, und so einen festen Halt des Steckprofilelementes 5 an dem Rand 3 gewährleisten.

Die Vorsprünge 16 hängen jeweils einteilig mit einem Fuß 17 zusammen, der jeweils in einer Aussparung 18 des Schenkels 12 bzw. 13 bündig eingelassen ist.

Die Aussparung 18 ist beim hier gezeigten Ausführungsbeispiel kreissegmentförmig mit einer im Vergleich zu ihrer Breite geringen Tiefe, und der Vorsprung 16 geht in den Fuß 17 etwa in Höhe der Mitte desselben über. Durch diese Formgebung wird erreicht, dass eine auf den Vorsprung 16 wirkende Kraft sich innerhalb des Fußes 17 verteilt und nicht zu einer Ablösung des Fußes 18 vom Körper des Steckprofilelementes 5 führen kann.

Fig. 3 zeigt einen Querschnitt des Steckprofilelementes 5 gemäß einer abgewandelten Ausgestaltung. Diese unterscheidet sich von der in Fig. 2 gezeigten Ausgestaltung durch das Vorhandensein zweiter Vorsprünge 20 an den Schenkeln 12, 13 in Höhe der Öffnung der Nut 15. Diese zweiten Vorsprünge 20 sind von dem Hauptteil der Innenflächen der Schenkel 12, 13 durch eine Rille 21 abgesetzt.

Fig. 4 zeigt das gleiche Steckprofilelement wie Fig. 3, allerdings mit in die Nut 15 eingeschobener Trägerplatte 2. Die Vorsprünge 16 sind jeweils zum Boden der Nut 15 hin abgelenkt und zwischen den Schenkeln 12, 13 und der Trägerplatte 2 flachgedrückt.

Wenn auf der Platte 2 Flüssigkeit verspritzt wird und Tropfen mit dem Steckprofilelement 5 in Kontakt kommen, so neigt ein solcher Tropfen 22 durch Kapillareffekt dazu, in den schmalen Spalt zwischen dem zweiten Vorsprung 20 und der Trägerplatte 2 einzudringen. Die Rille 21 verhindert ein weiteres Vordringen des Tropfens in die Nut 15, so dass dieser mit den Vorsprüngen 16 nicht in Kontakt kommt. Wenn der Tropfen verdunstet, führen eventuelle klebrige Rückstände nicht zu einem Aneinanderkleben des Steckprofilelementes 5 und der Trägerplatte 2, so dass es möglich bleibt, beide ohne Gefahr einer Beschädigung voneinander zu trennen.

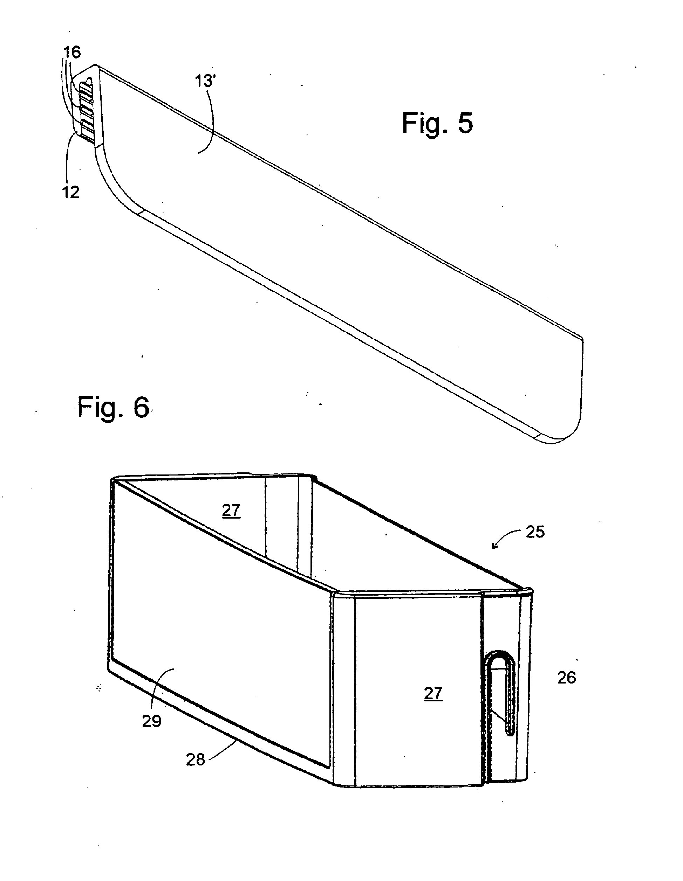

Fig. 5 zeigt eine perspektivische Ansicht eines Steckprofilelementes gemäß einer zweiten Ausgestaltung der Erfindung. Bei dieser Ausgestaltung sind die zwei Schenkel 12, 13' des Profilelementes unterschiedlich lang, der Schenkel 13' ist über die Öffnung der Nut 15 hinaus zu einer großflächigen Platte oder einem Schild verlängert. Ein derartiges Steckprofilelement ist als Dekorelement für einen Türabsteller 25 eines Kühlgerätes, wie in Fig. 6 gezeigt, vorgesehen. Der Türabsteller 25 ist ein oben offener Kasten aus Kunststoff, mit jeweils einen hakenförmig gebogenen Steg 26 an jeder seiner Stirnseiten 27, die in an sich bekannter Weise zum Einhängen an Holmen einer Türinnenverkleidung vorgesehen sind. Eine dem Kühlschrankinneren zugewandte Frontseite 28 weist eine großflächige Vertiefung 29 auf. Das Steckprofilelement der Fig. 5 ist vorgesehen, um von oben auf die Frontseite 28 des Türabstellers 25 aufgesteckt zu werden, so dass der zum Schild vergrößerte Schenkel 13' formschlüssig in die Vertiefung 29 eingreift.

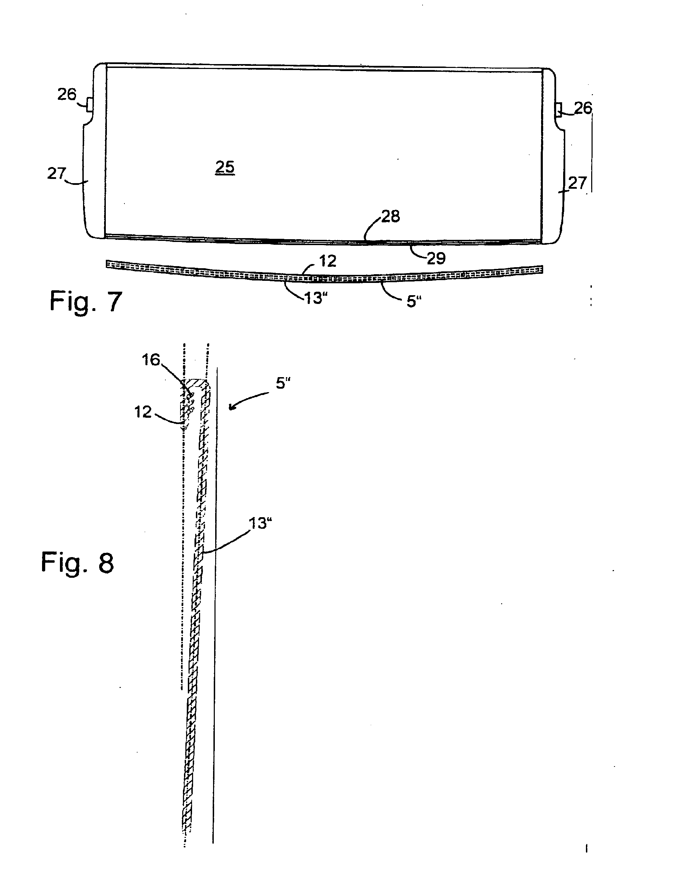

Fig. 7 zeigt eine Draufsicht auf den Türabsteller 25 und einen zum Aufstecken auf dessen Frontseite 28 vorgesehenes Steckprofilelement 5". Die Frontseite 28 ist geringfügig nach außen vorgewölbt; das Steckprofilelement 5" und insbesondere dessen Schild 13" ist in gleiche Richtung, allerdings mit deutlich kleinerem Krümmungsradius gewölbt. Durch die unterschiedlichen Krümmungen ist gewährleistet, dass der Schild 13" an seinen seitlichen Rändern exakt an der Oberfläche der Vertiefung 29 anliegt.

Fig. 8 zeigt einen Querschnitt durch das Steckprofilelement 5". Anhand der in der Fig. gezeigten gestrichelten Linien ist deutlich zu erkennen, dass der Schenkel 12 und der Schild 13" des Steckprofilelementes 5" nicht exakt parallel sind, sondern zum freien Rand des Schildes 13" hin, in Fig. 8 nach unten, konvergieren. Dies sowie die Tatsache, dass elastische Vorsprünge 16 nur am Schenkel 12, nicht aber am Schild 13" vorhanden sind, bewirkt, dass der freie untere Rand des Schildes 13" in am Türabsteller 25 montierten Zustand elastisch gegen die Oberfläche der Vertiefung 29 drückt. Der Schild 13" liegt somit jeweils auf der gesamten Länge seiner seitlichen Ränder und seines unteren Randes an der Oberfläche der Vertiefung 29 an und drückt elastisch gegen diese. Abstehende Ränder des Schildes 13" werden so vermieden, der Schild 13" mutet an, als wäre er am Türabsteller 25 verklebt, ohne es tatsächlich zu sein.

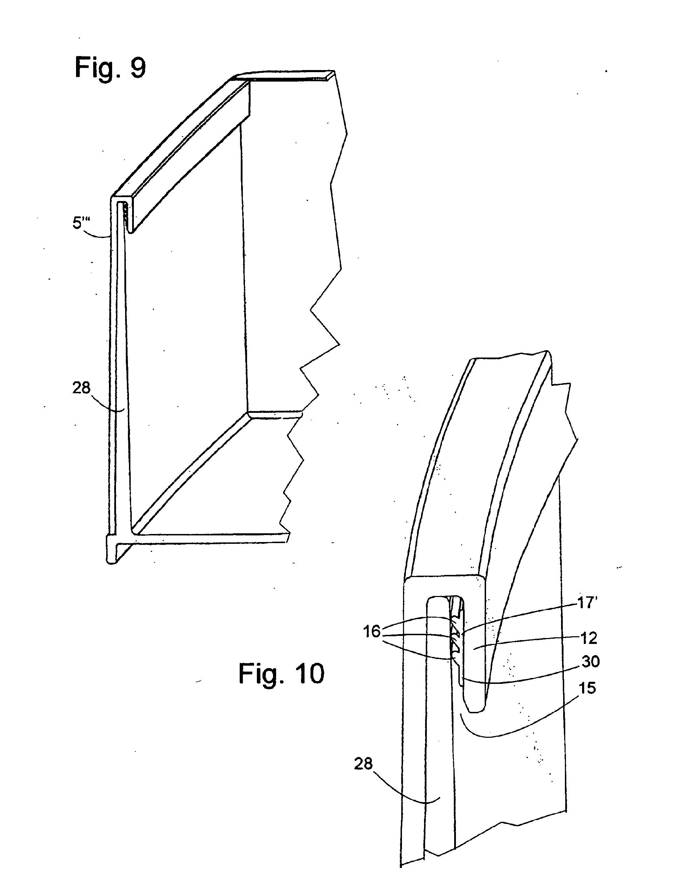

Fig. 9 zeigt ein Detail eines Türabstellers, teils in Perspektive, teils geschnitten. Der Schnitt erstreckt sich durch die Frontseite 28 und ein darauf aufgestecktes Steckprofilelement 5"'. Dieses unterscheidet sich vom in Fig. 8 gezeigten lediglich im Bereich der Vorsprünge 16. Während bei der Ausgestaltung der Fig. 8 jeder der Vorsprünge 16 durch einen eigenen Fuß am Schenkel 12 verankert ist, hängen hier die drei Vorsprünge 16, wie in Fig. 10 vergrößert gezeigt, über einen gemeinsamen Fuß 17' einteilig zusammen. Dieser ist auch nicht in den Schenkel 12 eingetieft, sondern haftet oberflächlich an dessen Innenseite. Um zu verhindern, dass die Vorsprünge 16 beim Aufstecken des Steckprofilelementes auf die Frontseite 28 vom Schenkel 12 abgezogen werden, weist der Fuß 17' zwischen der Öffnung der Nut 15 und dem der Öffnung am nächsten gelegenen Vorsprung 16 eine an der Innenfläche haftende, flache Zunge 30 auf, die beim Einstecken auf den äußersten Vorsprung 16 ausgeübte Zugkräfte im Fuß 17' verteilt.

## Patentansprüche

1. Kühlgerät mit einem Innenteil, das mit einem Steckprofilelement (5, 5',..., 6, 7) ausgestattet ist, das zwei eine Nut (15) begrenzende, miteinander verbundene Schenkel (12; 13, 13'...) aus einem ersten Werkstoff aufweist und das auf einen plattenförmigen Abschnitt (2, 28) mit einem Rand (3, 4) aufsteckbar ist, wobei an der der Nut (15) zugewandten Seitenfläche wenigstens eines der Schenkel (12; 13, 13'...) wenigstens auf einem Teil der Länge der Nut (15) ein erster in die Nut (15) hinein gerichteter Vorsprung (16) aus einem zweiten Werkstoff angebracht ist, der biegsamer als der erste Werkstoff ist, **dadurch gekennzeichnet, dass** die Außenflächen der Steckprofilelemente (5, 5',...6, 7) mit einer metallischen oder eine metallische Oberfläche imitierenden Folie überzogen sind.

2. Kühlgerät nach Anspruch 1, **dadurch gekennzeichnet, dass** die Steckprofilelemente (5, 5',...6, 7) im Inneren aus Kunststoffmaterial bestehen.

3. Kühlgerät nach Anspruch 1 oder Anspruch 2, **dadurch gekennzeichnet, dass** das Aussehen der metallischen oder der eine metallische Oberfläche imitierenden Folie insbesondere Aluminium oder Edelstahl ist.

4. Kühlgerät nach Anspruch 1, **dadurch gekennzeichnet, dass** die zwei Schenkel (12, 13) spiegelbildlich zueinander geformt sind.

5. Kühlgerät nach Anspruch 1, **dadurch gekennzeichnet, dass** einer der zwei Schenkel über die Öffnung der Nut (15) hinaus zu einem Schild (13', 13") verlängert ist.

6. Kühlgerät nach Anspruch 1, **dadurch gekennzeichnet, dass** der Schild (13") in Längsrichtung der Nut (15) mit der Nut (15) zugewandter Konkavität gekrümmt ist.

7. Kühlgerät nach Anspruch 5 oder Anspruch 6, **dadurch gekennzeichnet, dass** der Schild (13") und der andere Schenkel (12) in Richtung ihrer freien Ränder aufeinander zulaufen.

8. Kühlgerät nach Anspruch 1, **dadurch gekennzeichnet, dass** der Innenteil ein Fachboden (1) ist.

9. Kühlgerät nach Anspruch 6 oder Anspruch 7, **dadurch gekennzeichnet, dass** der plattenförmige Abschnitt (28) eine Vertiefung (29) zum Aufnehmen des Schildes (13") aufweist, und dass der Krümmungsradius des Schildes (13") in Längsrichtung der Nut (15) kleiner als ein entsprechender Krümmungsradius des plattenförmigen Abschnitts (28) ist.

10. Kühlgerät nach Anspruch 1, **dadurch gekennzeichnet, dass** der Innenteil ein Auszugkasten oder ein Türabsteller (25) ist.

## Claims

1. Refrigeration device with an inner part which is equipped with a plug profile element (5, 5',..., 6, 7), which has two limbs (12; 13, 13'...) connected to one another made of a first material, delimiting a slot (15) and which is able to be plugged into a plate-shaped section (2, 28) with an edge (3, 4) wherein, at least on a part of the length of the slot (15), a first projection (16) directed into the slot (15) and made of a second material which is more flexible than the first material is attached on the side surface facing towards the slot (15) of at least one of the limbs (12; 13, 13'...), **characterised in that** the outer surfaces of the plug profile elements (5, 5',...6, 7) are coated with a metallic foil or by a foil imitating a metallic surface.

2. Refrigeration device according to claim 1, **characterised in that** the plug profile elements (5, 5', ... 6, 7) consist of plastic material on the inside.

3. Refrigeration device according to claim 1 or claim 2, **characterised in that** the appearance of the metallic foil or the foil imitating a metallic surface is especially aluminium or stainless steel.

4. Refrigeration device according to claim 1, **characterised in that** the two limbs (12, 13) are shaped to form a mirror image of one another.

5. Refrigeration device according to claim 1, **characterised in that** one of the two limbs is extended beyond the opening of the slot (15) into a shield (13', 13 ").

6. Refrigeration device according to claim 1, **characterised in that** the shield (13") is curved in the longitudinal direction of the slot (15) with concavity facing towards the slot (15).

7. Refrigeration device according to claim 5 or claim 6, **characterised in that** the shield (13 ") and the other limb (12) converge in the direction of their free edges.

8. Refrigeration device according to claim 1, **characterised in that** the inner part is a compartment floor (1).

9. Refrigeration device according to claim 6 or claim 7, **characterised in that** plate-shaped section (28) has a recess (29) for accepting the shield (13") and that the radius of curvature of the shield (13") in the longitudinal direction of the slot (15) is smaller than a corresponding radius of curvature of the plate-shaped section (28).

10. Refrigeration device according to claim 1, **characterised in that** the inner part is a pull-out compartment or a door shelf (25).

## Revendications

1. Appareil de réfrigération comprenant une partie intérieure équipée d'un élément profilé emboîtable (5, 5', ... 6, 7) qui présente deux côtés (12 ; 13, 13' ...) reliés entre eux, délimitant une rainure (15), composés d'un premier matériau, et qui est emboîtable avec un bord (3, 4) sur une section (2, 28) en forme de plaque, une première saillie (16) composée d'un deuxième matériau, orientée en rentrant dans la rainure (15) étant placée sur la surface latérale tournée vers la rainure (15) de l'au moins un des côtés (12 ; 13, 13'), au moins sur une partie de la longueur de la rainure (15), lequel matériau est plus flexible que le premier matériau, **caractérisé en ce que** les surfaces extérieures des éléments profilés emboîtables (5, 5', ... , 6, 7) sont revêtus d'une feuille métallique ou d'une feuille imitant une surface métallique.

2. Appareil de réfrigération selon la revendication 1, **caractérisé en ce que** les éléments profilés emboîtables (5, 5', ..., 6, 7) sont constitués à l'intérieur de matière plastique.

3. Appareil de réfrigération selon la revendication 1 ou la revendication 2, **caractérisé en ce que** l'aspect de la feuille métallique ou de la feuille imitant une surface métallique est notamment de l'aluminium ou de l'acier inoxydable.

4. Appareil de réfrigération selon la revendication 1, **caractérisé en ce que** les deux côtés (12, 13) sont formés de manière réfléchie l'un par rapport à l'autre.

5. Appareil de réfrigération selon la revendication 1, **caractérisé en ce que** l'un des deux côtés est prolongé vers un écran (13', 13") au-delà de l'ouverture de la rainure (15).

6. Appareil de réfrigération selon la revendication 1, **caractérisé en ce que** l'écran (13") est courbé dans le sens longitudinal de la rainure (15) avec concavité orientée vers la rainure (15).

7. Appareil de réfrigération selon la revendication 5 ou la revendication 6, **caractérisé en ce que** l'écran (13") et l'autre côté (12) convergent l'un vers l'autre en direction de leurs bords libres.

8. Appareil de réfrigération selon la revendication 1, **caractérisé en ce que** la partie intérieure est une tablette (1).

9. Appareil de réfrigération selon la revendication 6 ou la revendication 7, **caractérisé en ce que** la section (28) en forme de plaque présente un approfondissement (29) pour loger l'écran (13") et **en ce que** le rayon de courbure de l'écran (13") est plus petit dans le sens longitudinal de la rainure (15) qu'un rayon de courbure correspondant de la section (28) en forme de plaque.

10. Appareil de réfrigération selon la revendication 1, **caractérisé en ce que** la partie intérieure est un tiroir ou un casier de porte (25).
